# EUROPEAN PATENT APPLICATION

(11) **EP 3 282 088 A1**
(43) Date of publication of application: **14.02.2018**
(21) Application number: 17185368.2
(22) Date of filing: 08.08.2017
(51) Int. Cl.: F01D 5/14, F01D 5/28, F01D 25/00, F02K 3/06, F04D 29/32

(54) **FAN BLADE ASSEMBLY AND METHOD OF FORMING A FAN BLADE ASSEMBLY**

(30) Priority: 08.08.2016 US 201615230659
(71) Applicant: United Technologies Corporation, Farmington, CT 06032 (US)
(72) Inventor: FOSTER, Larry, South Glastonbury, CT 06073 (US); HERTEL, Christopher J., Wethersfield, CT 06109 (US)
(74) Representative: Hall, Matthew Benjamin

(57) **Abstract**

A fan blade assembly for a gas turbine engine (10) includes a blade body (48), a blade cover (56) secured to the blade body and an adhesive layer (58) to secure the blade cover to the blade body, the adhesive layer configured to set at ambient temperature. A method of forming a fan blade assembly for a gas turbine engine includes forming a blade body, forming a blade cover separate from the blade body, and adhering the blade cover to the blade body via an adhesive layer located between the blade body and the blade cover, the adhesive layer configured to set at ambient temperature.

## Description

### BACKGROUND

This disclosure relates to gas turbine engines, and more particularly to fan blades for gas turbine engines.

A typical gas turbine engine includes a fan section including a fan rotor. The fan rotor includes a fan hub, with a plurality of fan blades secured to the fan hub and extending radially outwardly from the fan hub. In some gas turbine engine fans, the fan blades are hollow, or have cavities extending through the fan blades to reduce weight of the fan blades and/or improve operational performance of the fan blades, when compared to a solid fan blade, having no cavities. The hollow fan blades are typically formed from a metal material, such as titanium, and are typically fabricated by diffusion bonding a relatively thin cover onto a blade body with hollow cavities. This manufacturing process requires extensive investment in capital equipment and often produces dimensionally non-conforming parts. Alternative processes have been explored, one of which consists of adhesively bonding the cover onto the blade body. Lighter weight cover materials, such as carbon/epoxy composite, have been considered as well. Manufacturing trials for this configuration indicated that the elevated cure temperature of the epoxy film adhesive (approximately 250 °F (about 121 °C)), combined with the coefficient of thermal expansion mismatch between the titanium body and the composite cover, results in a distorted blade shape at room temperature. This distortion would be more pronounced at lower temperatures where the difference between the stress-free temperature (200 °F-250 °F (about 93 °C to 121 °C) and the coldest expected operating temperature (-65 °F (about -54°C)) is even greater.

### SUMMARY

In one embodiment, a fan blade assembly for a gas turbine engine includes a blade body, a blade cover secured to the blade body and an adhesive layer to secure the blade cover to the blade body, the adhesive layer configured to set at ambient temperature.

Additionally or alternatively, in this or other embodiments the adhesive layer includes a urethane, silicone, epoxy or polysulfide material.

Additionally or alternatively, in this or other embodiments the blade cover and the blade body define one or more blade channels in the fan blade assembly.

Additionally or alternatively, in this or other embodiments the blade body includes one or more ribs.

Additionally or alternatively, in this or other embodiments the one or more blade channels extend in a substantially radial direction.

Additionally or alternatively, in this or other embodiments the fan blade assembly is configured for an operating temperature between -65 and 200 degrees Fahrenheit.

Additionally or alternatively, in this or other embodiments the blade body is formed from a first material and the blade cover is formed from a second material different from the first material.

Additionally or alternatively, in this or other embodiments the blade body is formed from a metal material and the blade cover is formed from a carbon fiber reinforced composite material.

In another embodiment, a method of forming a fan blade assembly for a gas turbine engine includes forming a blade body, forming a blade cover separate from the blade body, and adhering the blade cover to the blade body via an adhesive layer located between the blade body and the blade cover, the adhesive layer configured to set at ambient temperature.

Additionally or alternatively, in this or other embodiments the adhesive layer includes a urethane, silicone, epoxy or polysulfide material.

Additionally or alternatively, in this or other embodiments one or more blade channels are defined between the blade cover and the blade body.

Additionally or alternatively, in this or other embodiments one or more ribs are formed in the blade body.

Additionally or alternatively, in this or other embodiments the one or more blade channels extend in a substantially radial direction.

Additionally or alternatively, in this or other embodiments the fan blade assembly is configured for an operating temperature between -65 and 350 degrees Fahrenheit.

Additionally or alternatively, in this or other embodiments the blade body is formed from a first material and the blade cover is formed from a second material different from the first material.

Additionally or alternatively, in this or other embodiments the blade body is formed from a metal material and the blade cover is formed from a carbon fiber reinforced composite material.

In yet another embodiment, a fan assembly for a gas turbine engine includes a fan hub and a plurality of fan blades extending radially outwardly from the fan hub. At least one fan blade of the plurality of fan blades includes a blade body, a blade cover secured to the blade body, and an adhesive layer to secure the blade cover to the blade body. The adhesive layer is configured to set at ambient temperature.

Additionally or alternatively, in this or other embodiments the adhesive layer includes a urethane, silicone, epoxy or polysulfide material.

Additionally or alternatively, in this or other embodiments the blade body is formed from a first material and the blade cover is formed from a second material different from the first material.

Additionally or alternatively, in this or other embodiments the blade body is formed from a metal material and the blade cover is formed from a carbon fiber composite material.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings, which serve to illustrate embodiments of the present disclosure by way of example only, and in which:
FIG. 1 is a schematic illustration of an exemplary embodiment of a gas turbine engine;
FIG. 2 is a schematic illustration of an exemplary embodiment of a fan section of a gas turbine engine;
FIG. 3 is a cross-sectional view of an exemplary embodiment of a fan rotor of a gas turbine engine;
FIG. 4 is a cross-sectional view of an exemplary embodiment of a fan blade for a gas turbine engine; and
FIG. 5 is a plan view of an exemplary embodiment of a fan blade for a gas turbine engine.

### DETAILED DESCRIPTION

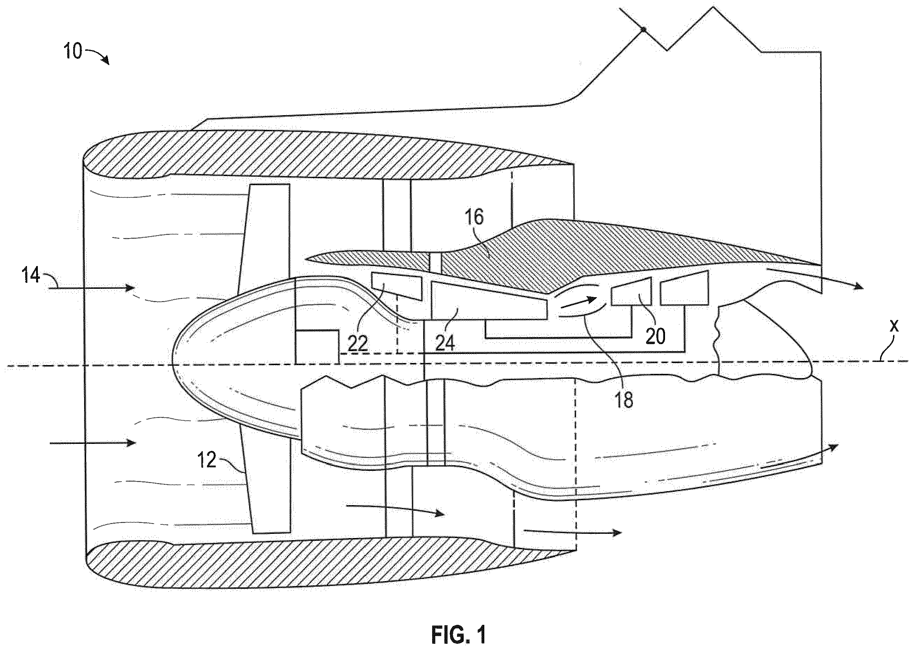

FIG. 1 is a schematic illustration of a gas turbine engine 10. The gas turbine engine generally has a fan 12 through which ambient air is propelled in the direction of arrow 14, a compressor 16 for pressurizing the air received from the fan 12 and a combustor 18 wherein the compressed air is mixed with fuel and ignited for generating combustion gases.

The gas turbine engine 10 further comprises a turbine section 20 for extracting energy from the combustion gases. Fuel is injected into the combustor 18 of the gas turbine engine 10 for mixing with the compressed air from the compressor 16 and ignition of the resultant mixture. The fan 12, compressor 16, combustor 18, and turbine 20 are typically all concentric about a common central longitudinal axis X of the gas turbine engine 10.

The gas turbine engine 10 may further comprise a low pressure compressor 22 located upstream of a high pressure compressor 24 and a high pressure turbine located upstream of a low pressure turbine. For example, the compressor 16 may be a multi-stage compressor 16 that has a low-pressure compressor 22 and a high-pressure compressor 24 and the turbine 20 may be a multistage turbine 20 that has a high-pressure turbine and a low-pressure turbine. In one embodiment, the low-pressure compressor 22 is connected to the low-pressure turbine and the high pressure compressor 24 is connected to the high-pressure turbine.

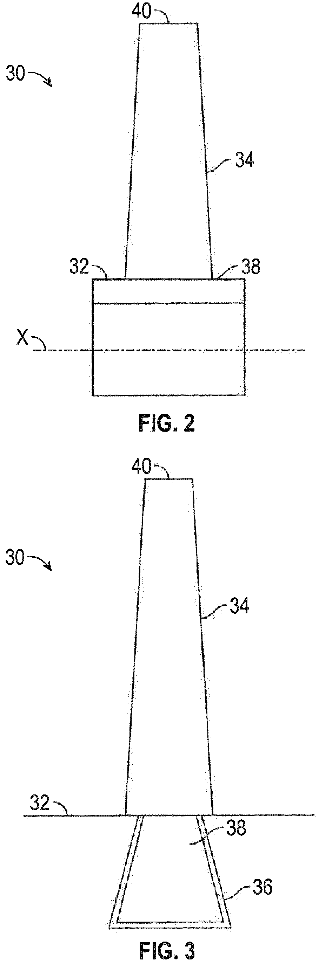

Referring now to FIG. 2, the fan 12 includes a fan rotor 30 having a fan hub 32 located at the central axis X and a plurality of fan blades 34 extending radially outwardly from the fan hub 32. In some embodiments, the fan blades 34 are secured to the fan hub 32 by, for example, welding, while in other embodiments, such as shown in FIG. 3, the fan hub 32 includes a plurality of hub slots 36 into which a blade root 38 is inserted and secured at the hub slot 36 by a retainer (not shown). Referring again to FIG. 2, each fan blade 34 extends radially outwardly from the fan hub 32 from the blade root 38 to a blade tip 40, and extends along the central axis X from a blade leading edge 42 to a blade trailing edge 44.

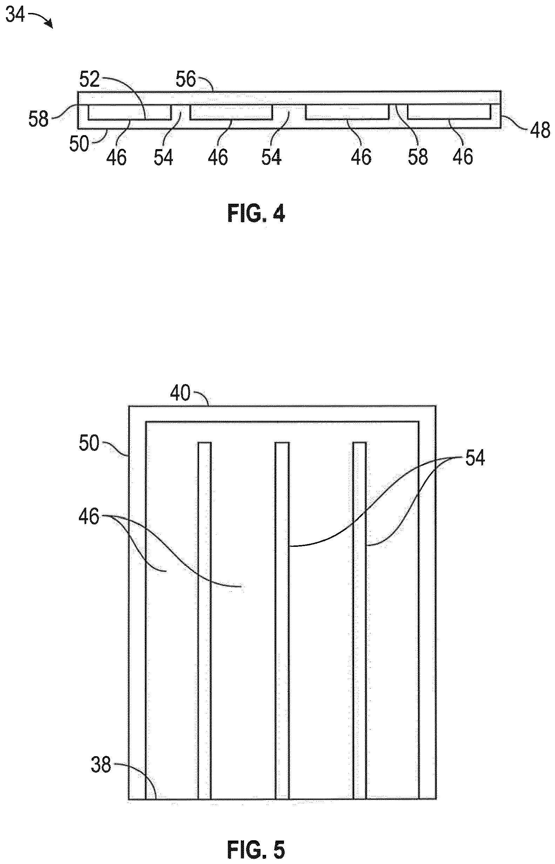

FIG. 4 illustrates a cross-sectional view of fan blade 34 taken along a selected radius between the blade root 38 and the blade tip 40. The fan blade 34 is a hollow fan blade 34, having one or more cavities 46 located inside the fan blade 34. The fan blade 34 is constructed from a blade body 48 having a first external side 50 and a first internal side 52, with the first internal side 52 having a plurality of ribs 54 or other features formed therein. A blade cover 56 is secured to the blade body 48 at the first internal side 52, with the blade cover 56, the blade body 48 and the ribs 54 defining the cavities 46. Referring to FIG. 5, in some embodiments the ribs 54 extend in a substantially radial direction between the blade root 38 and the blade tip 40. It is to be appreciated, however, that in other embodiments the ribs 54 may extend in other directions.

Referring again to FIG. 4, in some embodiments, the blade body 48 is formed from a metal material, such as a titanium material, while the blade cover 56 is formed from a composite material such as a carbon fiber and epoxy composite material with the blade cover 56 secured to the blade body 48 by an adhesive material layer 58. The thermosetting polymer adhesive material layer 58 is of a material that initially cross-links and sets, or hardens, at room temperature to secure the blade cover 56 to the blade body 48. The materials utilized may include: urethane, epoxy, silicone, and polysulfide compounds. Utilizing such an adhesive does not require an initial elevated temperature cure cycle to set the adhesive and secure the blade cover 56 to the blade body 48, thus reducing the residual thermal stress and distortion in the fan blade 34 from coefficient of expansion differences between the titanium blade body 48 and the composite blade cover 56 at its typical operating temperature, which ranges from -65F to 200F (about -54 °C to 93 °C).

While an elevated temperature cure cycle, at above room temperature, for example, 250 degrees F (about 121 °C), is not necessary, in some embodiments such a cure may be performed to improve mechanical properties of the adhesive. Although some distortion may occur during the elevated temperature cure cycle, the since the stress-free condition of the fan blade 34 is at room temperature rather than at the elevated temperature, the magnitude of the distortion will be reduced.

While the present disclosure has been described in detail in connection with only a limited number of exemplary embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various exemplary embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

The following clauses set out features of the present disclosure which may or may not presently be claimed, but which may serve as basis for future amendments and/or divisional application(s).
1. A fan blade assembly for a gas turbine engine, comprising:
   a blade body;
   a blade cover secured to the blade body; and
   an adhesive layer to secure the blade cover to the blade body, the adhesive layer configured to set at ambient temperature.
2. The fan blade assembly of clause 1, wherein the adhesive layer comprises a urethane, silicone, epoxy or polysulfide material.
3. The fan blade assembly of clause 1, wherein the blade cover and the blade body define one or more blade channels in the fan blade assembly.
4. The fan blade assembly of clause 3, wherein the blade body includes one or more ribs.
5. The fan blade assembly of clause 3, wherein the one or more blade channels extend in a substantially radial direction.
6. The fan blade assembly of clause 1, wherein the fan blade assembly is configured for an operating temperature between -65 and 200 degrees Fahrenheit.
7. The fan blade assembly of clause 1, wherein the blade body is formed from a first material and the blade cover is formed from a second material different from the first material.
8. The fan blade assembly of clause 7, wherein the blade body is formed from a metal material and the blade cover is formed from a carbon fiber reinforced composite material.
9. A method of forming a fan blade assembly for a gas turbine engine, comprising:
   forming a blade body;
   forming a blade cover separate from the blade body; and
   adhering the blade cover to the blade body via an adhesive layer disposed between the blade body and the blade cover, the adhesive layer configured to set at ambient temperature.
10. The method of clause 9, wherein the adhesive layer comprises a urethane, silicone, epoxy or polysulfide material.
11. The method of clause 9, further comprising defining one or more blade channels between the blade cover and the blade body.
12. The method of clause 11, further comprising forming one or more ribs in the blade body.
13. The method of clause 11, wherein the one or more blade channels extend in a substantially radial direction.
14. The method of clause 9, wherein the fan blade assembly is configured for an operating temperature between -65 and 350 degrees Fahrenheit.
15. The method of clause 9, further comprising:
   forming the blade body from a first material; and
   forming the blade cover from a second material different from the first material.
16. The method of clause 15, wherein the blade body is formed from a metal material and the blade cover is formed from a carbon fiber reinforced composite material.
17. A fan assembly for a gas turbine engine, comprising:
   a fan hub; and
   a plurality of fan blades extending radially outwardly from the fan hub, at least one fan blade of the plurality of fan blades including:
      a blade body;
      a blade cover secured to the blade body; and
      an adhesive layer to secure the blade cover to the blade body, the adhesive layer configured to set at ambient temperature.
18. The fan assembly of clause 17, wherein the adhesive layer comprises a urethane, silicone, epoxy or polysulfide material.
19. The fan assembly of clause 17, wherein the blade body is formed from a first material and the blade cover is formed from a second material different from the first material.
20. The fan assembly of clause 19, wherein the blade body is formed from a metal material and the blade cover is formed from a carbon fiber composite material.

## Claims

1. A fan blade assembly for a gas turbine engine (10), comprising:
a blade body (48);
a blade cover (56) secured to the blade body; and
an adhesive layer (58) to secure the blade cover to the blade body, the adhesive layer configured to set at ambient temperature.

2. The fan blade assembly of claim 1, wherein the adhesive layer comprises a urethane, silicone, epoxy or polysulfide material.

3. The fan blade assembly of claim 1 or 2, wherein the blade cover and the blade body define one or more blade channels in the fan blade assembly.

4. The fan blade assembly of claim 3, wherein the blade body includes one or more ribs (54).

5. The fan blade assembly of claim 3 or 4, wherein the one or more blade channels extend in a substantially radial direction.

6. The fan blade assembly of any preceding claim, wherein the fan blade assembly is configured for an operating temperature between -65 and 200 degrees Fahrenheit (-54 and 93 degrees Centrigrade).

7. The fan blade assembly of any preceding claim, wherein the blade body is formed from a first material and the blade cover is formed from a second material different from the first material; and
preferably the blade body is formed from a metal material and the blade cover is formed from a carbon fiber reinforced composite material.

8. A method of forming a fan blade assembly for a gas turbine engine, comprising:
forming a blade body;
forming a blade cover separate from the blade body; and
adhering the blade cover to the blade body via an adhesive layer disposed between the blade body and the blade cover, the adhesive layer configured to set at ambient temperature.

9. The method of claim 8, wherein the adhesive layer comprises a urethane, silicone, epoxy or polysulfide material.

10. The method of claim 8 or 9, further comprising defining one or more blade channels between the blade cover and the blade body.

11. The method of claim 10, further comprising forming one or more ribs in the blade body.

12. The method of claim 10 or 11, wherein the one or more blade channels extend in a substantially radial direction.

13. The method of any of claims 8 to 12, wherein the fan blade assembly is configured for an operating temperature between -65 and 350 degrees Fahrenheit (-54 and 177 degrees Centrigade).

14. The method of any of claims 8 to 13, further comprising:
forming the blade body from a first material; and
forming the blade cover from a second material different from the first material;
wherein preferably the blade body is formed from a metal material and the blade cover is formed from a carbon fiber reinforced composite material.

15. A fan assembly for a gas turbine engine, comprising:
a fan hub (32); and
a plurality of fan blades extending radially outwardly from the fan hub, at least one fan blade of the plurality of fan blades being a fan blade assembly as claimed in any of claims 1 to 7.
